# EUROPEAN PATENT APPLICATION

(11) **EP 3 822 874 A1**
(43) Date of publication of application: **19.05.2021**
(21) Application number: 20275153.3
(22) Date of filing: 28.09.2020
(51) Int. Cl.: G06Q 10/00, G06Q 10/08

(54) **RAIL ASSET MANAGEMENT METHOD, SYSTEM AND APPARATUS**

(30) Priority: 27.09.2019 GB 201913996
(71) Applicant: Digital Rail Systems Limited, South Queensferry EH30 9AL (GB)
(72) Inventor: DANAGHER, Adrian, South Queensferry, EH30 9AL (GB); PERROT, Christopher, South Queensferry, EH30 9AL (GB)
(74) Representative: Wallace, Stuart

(57) **Abstract**

A rail asset management method, system and apparatus are disclosed. The method generally comprises the steps of creating a database having one or more fields relating to the positional data of the rail track structures; loading data onto the database; attaching a data tag provided with a data tag identification value to a rail track structure; associating the data tag identification value with a record of the rail track structure within the database and using said data to position the rail structural item. The data tag may be provided with near field communication. It may be provided with a holder. The holder and or the data tag may use one or more magnets to attach to a rail asset or structure.

## Description

### Field of the Invention

The present invention relates to an apparatus and method of installing railway equipment and associated line-side equipment and rail structures, including Overhead Line Electrification equipment "OLE", and especially to the use of a data carrier or data tag and database system to facilitate that system, and to accurately record the position of such equipment and structures with respect to the associated track.

The tags can also be used to digitize all OLE and Track datum plates. This will replace the current plates, significantly reduce the amount of plastic being used and reduce the requirement for staff on track in turn making this system more environmentally friendly and safer.

### Background to the Invention

Rail tracks have various associated structures or "assets" beside them. This includes such things as Overhead Line Electrification (OLE) masts/structures, signalling apparatus, electrical junction boxes, bridges, fences, etc. Typically the positions where these items should be installed is simply marked on the rail track itself with a piece of chalk, for example a simple mark with some associated numbers instructing an installer to place a certain item would be marked on the web of the track.

This is obviously unsatisfactory as such chalk marks may easily be erased by environmental factors or simple carelessness. Moreover, if such marks are placed prior to a structure being laid down, they may not physically accord with the terrain upon which the structure is placed. For example, rocky outcroppings may prevent an OLE gantry being placed at the marked point, and the installer may have to alter the precise placing.

The original placing may be recorded, but often revised placements get miscommunicated due to emails and staff turnover etc. meaning structures get installed incorrectly. Moreover, different staff may be in possession of differing and conflicting design revisions. Updating the database in head office will ensure the latest live information is available via the system or the tags at all times and therefore eliminate such errors. The database may also store all historical design revisions for the project including changes in placement, type of asset, sub-type of asset etc.

### Summary of the Invention

According to a first aspect of the present invention there is provided a method of recording data of rail-track assets comprising the steps of: creating a database having one or more fields relating to the data of the rail track asset;
loading data onto the database;
attaching a data tag provided with a data tag identification value to a rail-track asset;
associating the data tag identification value with a record of the rail track-asset;
using said data to position the rail structural item.

A data reader may be used to collect and display the data identification value on the data tag.

The data tag may be a radio tag.

One or more radio tags may be used each having Unique Identification Value readable by the data reader. This allows for multiple assets to be tracked.

There may be provided a data carrier holder.

The data carrier holder may comprise a plastic housing.

The plastic housing may incorporate the data carrier.

The data carrier holder may include one or more magnets.

There may be provided a database which stores the asset data against the unique identification number of the radio tag.

The database may store placement or co-ordinate data.

The database may have additional fields to store further data about the rail track assets.

The database may contain visual representations of the rail-track assets.

The database may contains photographs relating to the assets.

The data tags may be stored after positioning proximal to the assets being placed.

The data tags are stored in a datum plate or plate(s).

According to a second aspect of the present invention there is provided a tag for use in installing rail-track structures comprising a data carrier, a housing, and an attachment means.

The attachment means may be adhesive, mechanical or magnetic.

The housing may comprise a plastic housing with a data carrier storage compartment.

The attachment means may comprise a magnet.

The rail structural items may be a piece of rail track, an OLE Structure, a bridge, a signal, etc; anything which may be required for operation of the rail-track once constructed.

A data reader may be used to collect and display the data stored on the data tag.

The data reader may be a specific handheld device, or may comprise an app running on a smartphone, tablet, personal computer, or similar.

If the installation of the rail track structural item requires to be moved for any reason, the system may have new positional data uploaded to the database. This will replace the old positional data already loaded and the historical information will be stored. This may provide a record of the relative movement of the rail track structural item.

The data carrier may be a radio tag.

Each radio tag may have a Unique Identification Number. The Unique Identification Number may be readable by the data reader.

There may be provided a data carrier holder.

The data carrier holder may comprise a plastic housing.

The plastic housing may incorporate the data carrier.

The data carrier holder may include a magnet or magnets. This enables it to be attached to at least partly ferromagnetic rail track structural items. The data carrier holder may also be attached via adhesive tape or adhesive.

The physical shape of the data carrier and/or tag may be shaped to facilitate attachment to the web of rail.

There may be provided a database which stores the data against the unique identification number of the data tag.

The database may store both intended placement data and actual placement data.

The database may have additional fields to store further data about the rail track structural items.

Such data may include terrain information, notes, service or inspection schedules, and so forth.

The database may contain engineering drawings relating to the assets, structures and/or rail line. These engineering drawings may be viewed on the smartphone application. The database may associate a date and time with these engineering drawings. This may be based on the upload date and time.

The database may contain photographs relating to the assets, structures or rail line. These photographs may be viewed on the smartphone app. New photographs associated with a particular structure may be taken and up-loaded to the database via the smartphone application. The database may associate a date and time with these photographs. This may be based on the upload date and time.

The database may contain text or notes relating to the assets, structures or rail line. These text or notes may be viewed on the smartphone app. New text or notes associated with a particular structure may be taken and up-loaded to the database via the smartphone application. The database may associate a date and time with these text or notes. This may be based on the upload date and time.

The tags may be stored after positioning proximal to the structures being placed.

The tags may be stored in a datum plate or plate(s).

According to a third aspect of the present invention there is provided a system for recording data of rail-track assets comprising a database including one or more fields relating to rail-track assets;
a data tag provided with a data tag identification value attachable to a rail-track asset;
a data-reader device to read the data tag identification value;
the data-reader device being able to edit the database based on data it may collect regarding the rail-track asset or asset(s).

According to a fourth aspect of the present invention there is provided a database suitable for use with the method of the first aspect or the apparatus of the third aspect.

According to a fifth aspect of the present invention there is provided software enabling the computer implementation of the first aspect of the present invention or operation of the system of the third aspect or creation of the database of the fourth aspect.

### Brief Description of the Drawings

Embodiments of the present invention will now be described, by way of example only, in the forthcoming pages with reference to the attached Figs which show:
Fig. 1 is a schematic diagram of part of a railway network;
Fig. 2 is a flowchart of the generalised data recordal process of the present invention;
Fig. 3 is a flow chart of a new project initialisation which forms part of the various aspects of the present invention;
Fig. 4 is a flow chart of a data tagging process which forms part of the various aspects of the present invention;

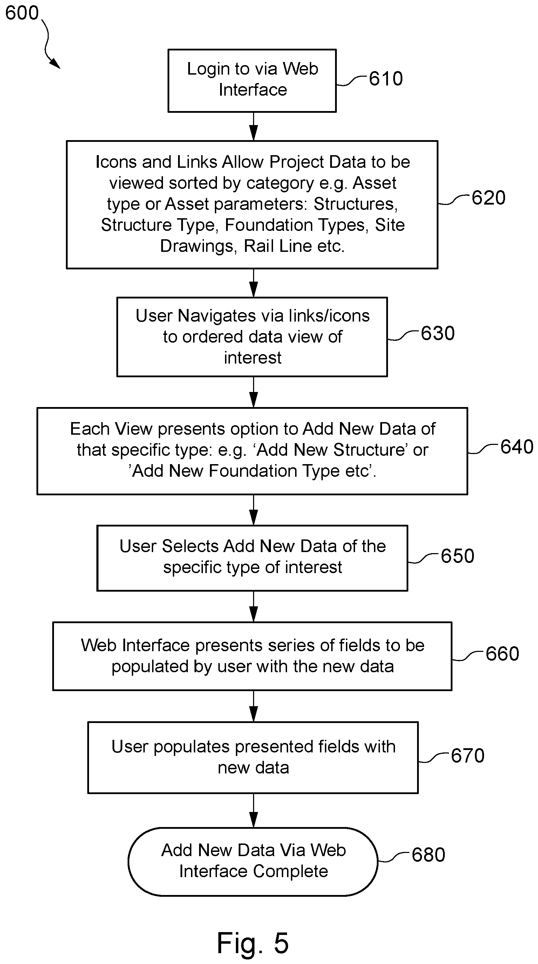

Fig. 5 is a flow chart of a data retrieval and addition process which forms part of the various aspects of the present invention;

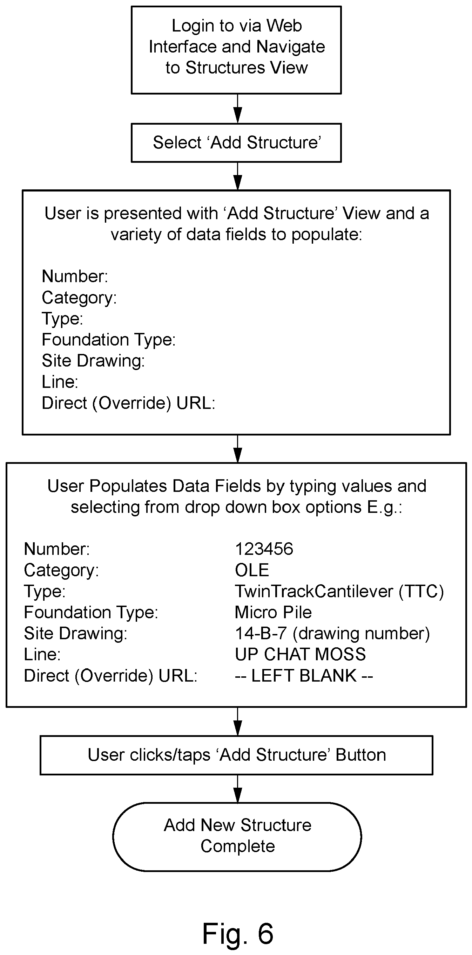

Fig. 6 is a flow chart of a new structure being added to a database process which forms part of the various aspects of the present invention;
Fig. 7 is a perspective view of a first side of a first embodiment data tag according to the present invention;
Fig. 8 is a plan view of a first side of the data tag of Fig. 7;
Fig. 9 is a side elevation of the data tag of Fig. 7;
Fig.10 is a plan view of a second side of the data tag of Fig. 7;
Fig. 11 is a perspective view of a second side of the data tag of Fig. 7;
Fig. 12 is a perspective view of a first side of data tag holder according to the present invention;
Fig. 13 is a perspective view of a second side of the data tag holder of
Fig. 12;

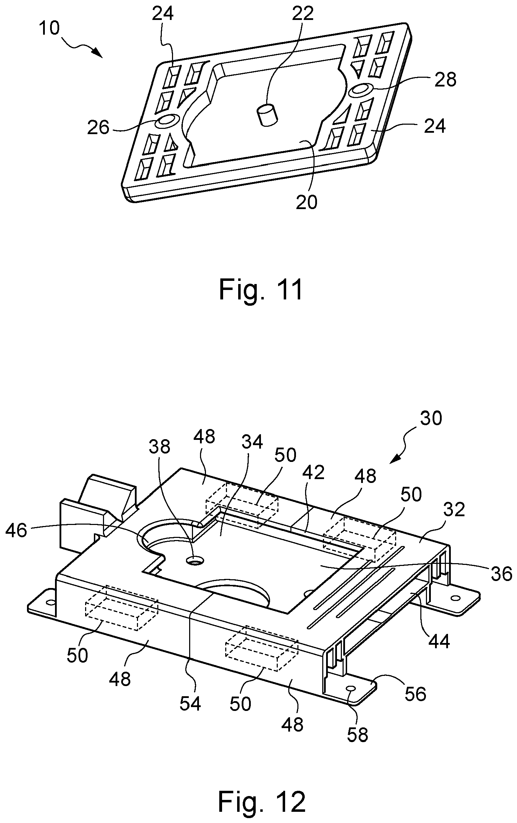

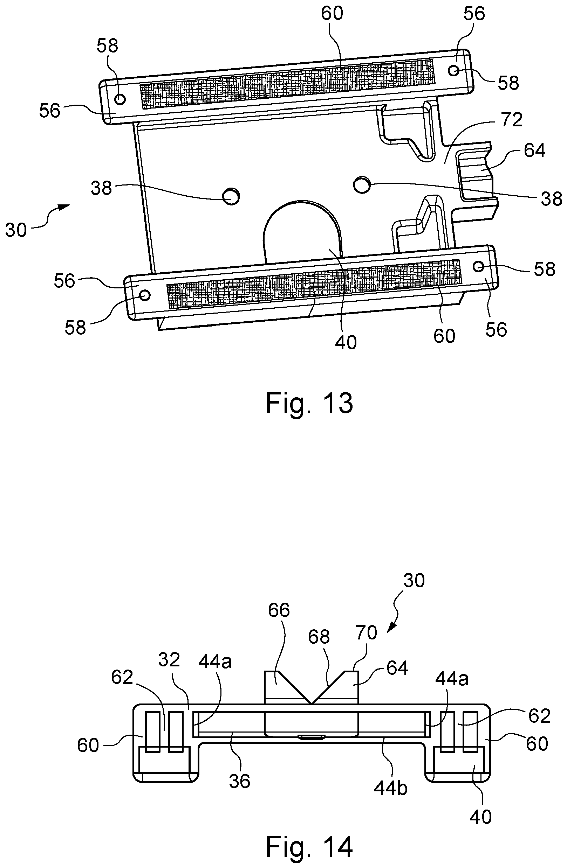

Fig. 14 is a side elevation of the data tag holder of Fig. 12;

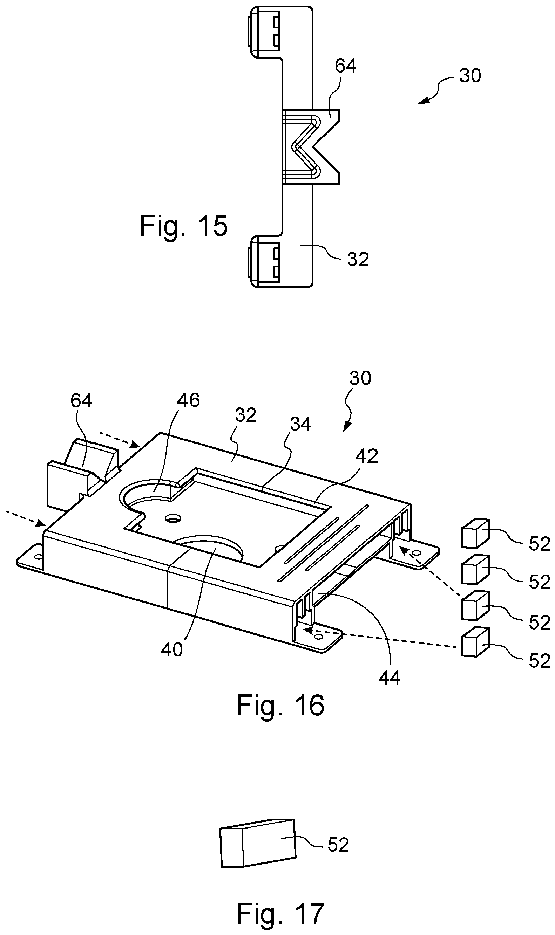

Fig. 15 is a further side elevation of the data tag holder of Fig. 12;
Fig. 16 is a further perspective view of the data tag holder of Fig. 12;
Fig. 17 is a perspective view of a magnet retaining bung of the data tag holder of Fig. 12;

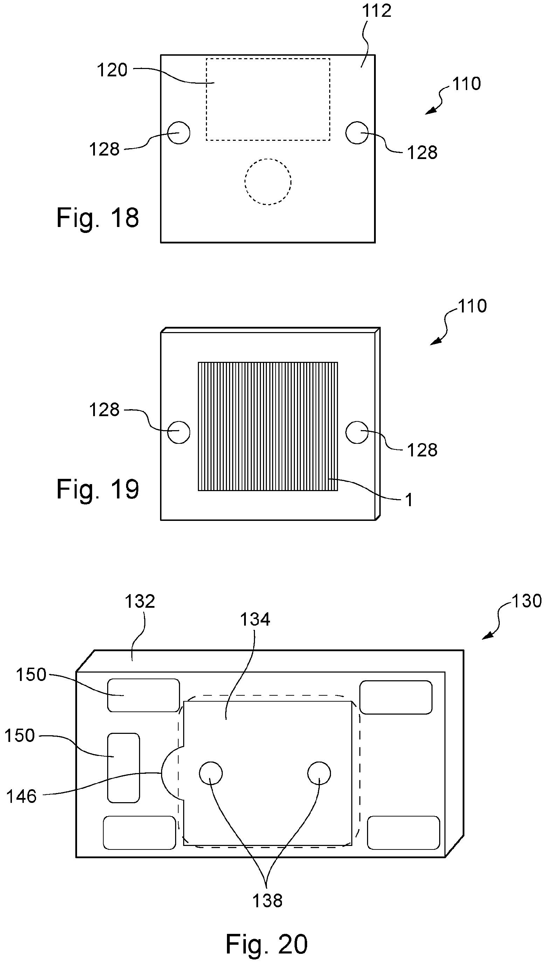

Fig. 18 is a plan view of first side of a second embodiment data tag according to the present invention;
Fig. 19 is a plan view of a second side of the data tag of Fig. 18;
Fig. 20 is a plan view of a second embodiment data tag holder according to the present invention;

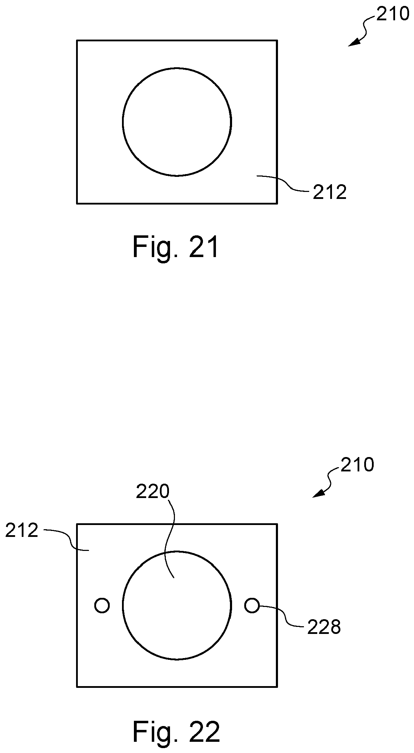

Fig. 21 is a plan view of a first side of a third embodiment data tag according to the present invention;
Fig. 22 is a plan view of a second side of the data tag of Fig. 21;

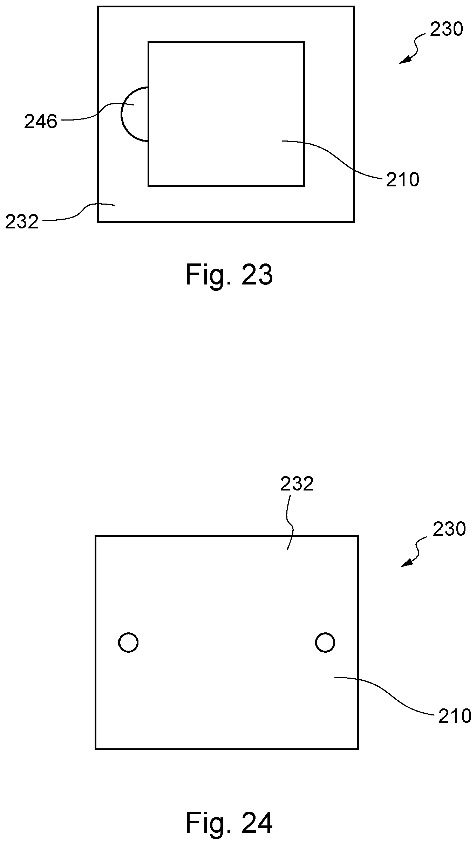

Fig. 23 is a plan view of a third embodiment data tag holder according to the present invention;
Fig. 24 is a perspective view of an assembly comprising the third embodiment data tag holder of Fig. 23 and the third embodiment data tag of Fig. 21;

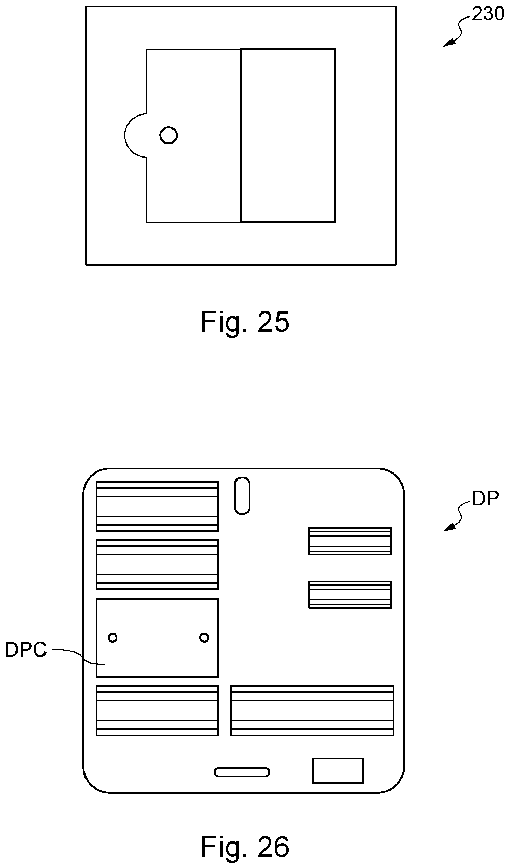

Fig. 25 is a further perspective view of an assembly comprising the third embodiment data tag holder of Fig. 23 and the third embodiment data tag of Fig. 21 with the data tag holder in a partially inserted position;
Fig. 26 is a prior art OLE datum plate usable with the present invention.

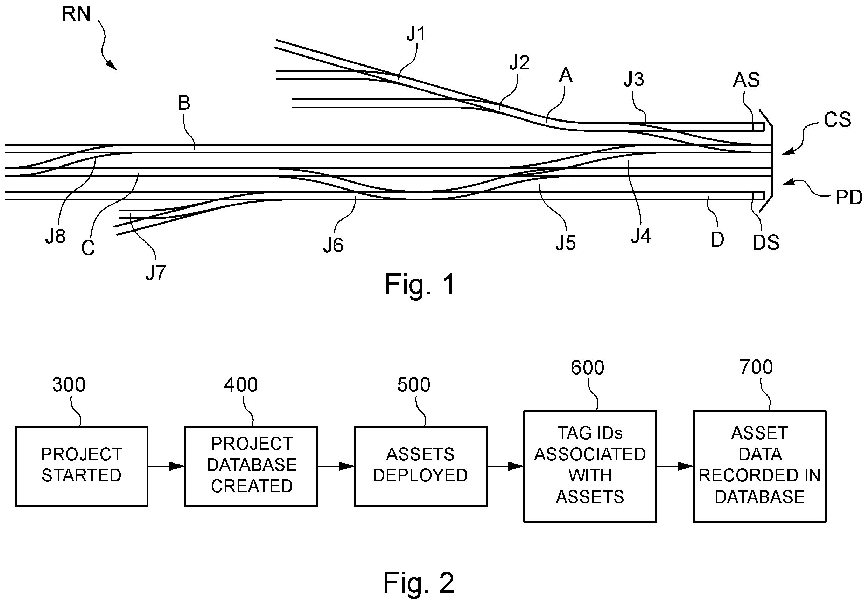

Referring to the drawings and initially to Fig. 1, a railway network RN comprises four rail lines A, B, C, D, with each line comprising various construction components such as rail-tracks, junctions, signals, OLE equipment, etc, generally comprising "assets" of the rail-track.

A central train station CS receives lines B and C to enable passengers to embark and disembark, with lines A and D terminating in sidings AS and DS adjacent the entry tunnel to the central train station CS. Eight junctions J1 to J8 are provided between and within the lines A, B, C, D which allow, for example, a train arriving via line A to be transferred to line B to enable arrival at central train station CS.

In the present example lines B and C are electrified lines whereas lines A and D are not electrified. By "electrified" it will be understood by the skilled addressee that lines B and C have overhead electric transmission lines "Overhead Line Electrification" or "OLE" which enable fully electric trains and locomotives to receive electrical power, but this may also encompass third rail electricity transfer systems.

Lines B and C have a plurality of lineside OLE structures (not shown) which enable the electrified lines to be suspended above the rail lines for power transmission.

In addition, the lines A, B, C, D may have various other structures adjacent them, including bridges, aqueducts, viaducts, signals, etc.

Collectively, tracks, lineside furniture, miscellaneous structures including those above, etc, may be deemed "assets".

Central train station CS acts as a datum point for the location of the various components of the four railways lines, including the OLE structures, the junctions J1 to J8, and the various bridges, aqueducts, viaducts, signals, etc. Each structure may be located as a distance to the east and/or the north from a specific datum point PD within the train station CS.

From time-to-time, new components may be added to the railway network RN. In the present example, it is proposed that line D be electrified. A plurality of OLE support structures have to be installed along the length of line D at various intervals in order to suspend the contact wire. In addition, feeder substations have to be installed to ensure that power from the electrical grid is fed into the contact wire at the appropriate voltage. For example, in the United Kingdom, the National Power Grid has a voltage of around 400,000 volts, whereas the OLE power requirement for the network RN is for 25,000 volts.

A survey of line D is carried out and six co-ordinates from the datum point PD are planned for placement of OLE support structures (X1, Y1; X2, Y2; X3, Y3; X4, Y4; X5, Y5; X6, Y6) and a further co-ordinate (X7, Y7) is selected for placement of a feeder substation FS. A datum plate DP (see Fig. 26) is attached to each of these assets. Each of these assets in the present example will be placed between junction J6 and junction J7. The datum plate DP records positioning information relating to the asset after installation and specifically discloses relative positioning of the asset to the adjacent track, including distance and height difference.

In a prior art process these seven co-ordinates may simply be recorded as the actual placement co-ordinates of the seven structures. However, it is typical in practice that once a construction crew arrive at these desired co-ordinates, the precise co-ordinates may be unsuitable for placement.

In the present example, it may transpire that X7, Y7 is unsuitable for placement of feeder substation FS because the ground contains a large boulder which prevents a suitable foundation being laid. In this situation, the construction crew would ordinarily use their judgement to select an alternative co-ordinate (X8, Y8) for the feeder substation FS.

The present invention uses a data tag and a data tag carrier to enable tracking of these assets. Various embodiments of the data tag and data tag carrier are shown in the attached Figs.

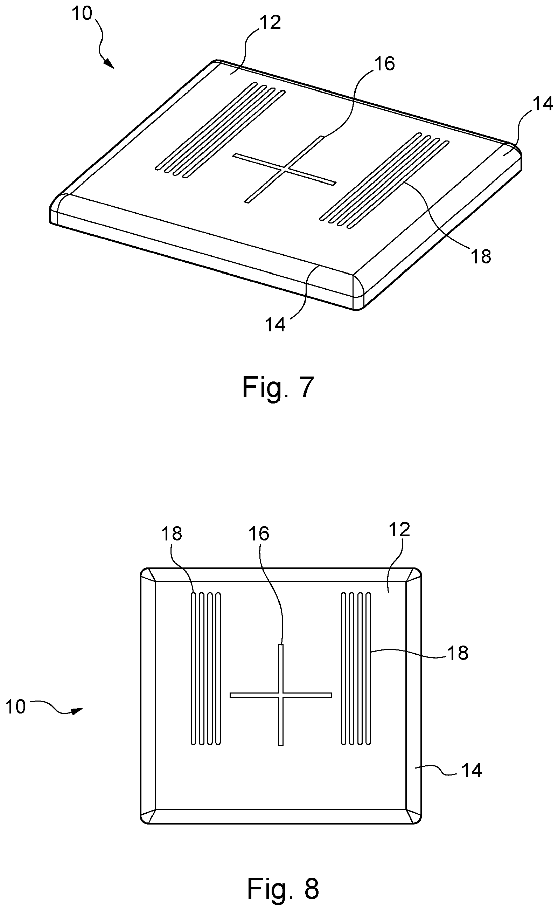

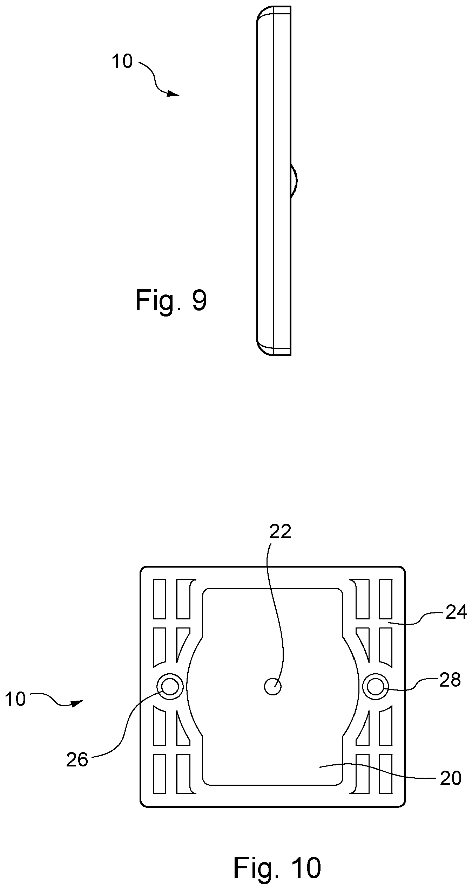

Figs 7 to 17 depict a first embodiment data tag 10 and first embodiment data tag carrier 30. The data tag 10 comprises a plastic body 12. The plastic body 12 may be formed by moulding or similar processes. The plastic body 12 is a substantially rectangular body, verging on being square. Filleted edges 14 are provided along the edges of the plastic body. A cruciform alignment marker 16 is formed in the uppermost or front face of the data tag 10. The alignment marker 16 provides a datum target point for external measurement and measuring devices.

Two textured areas 18 flank the alignment marker 16 which assist in the handling of the data tag 10. The data tag 10 is optionally dimensioned to enable it to fit in a cavity DPC provided on the datum plate DP.

An electronics storage cavity 20 is provided within the body 12 of the data tag 10. Internal radio tag electronics, antenna and an optional battery (not shown) are fitted within the storage cavity 20. The plastic body 12 protects the internal electronic components from environmental factors. Storage cavity 20 is filled with an encapsulation substance, such as an epoxy or potting compound to protect and retain electronics, antenna, NFC (Near Field Communication) and/or RFID (Radio Frequency Identification) tag be fitted into the storage cavity 20. In this way, each data tag 20 may have a unique identification code or number which may be read by a user using appropriate electronic equipment, such as a smart phone or smart device equipped with near field communication. In addition, the data-tag 10 may be provided with additional data storage capacity and function to enable further data to be stored.

A central boss 22 is provided within the storage cavity and comprises a short cylindrical projection which aids in the fitting of the various internal components of the data tag 10. The central boss 22 helps retain radio electronics & antenna or NFC or RFID tag during encapsulation process and prevents them from floating to surface before the encapsulation has cured and/or set.

Webbed support structures 24 flank the storage cavity and provide structure to the data tag 10. Two locating bosses 26, 28 are provided on the webbed support structures 24. The locating bosses 26, 28 are filleted cylindrical projections. The webbed support structures 24 comprises alternating recesses and ribs, which provide mechanical reinforcement of the data tag 10 and space into which epoxy/potting compound or the like may enter to secure electronics.

A tag holder 30 is depicted in Figs 12 to 17. The tag holder 30 is used to receive the data tag 10. The tag holder 30 comprises a plastic body 32. A data tag receiving cavity 34 is formed in the plastic body 32, dimensioned to receive the data tag 10. The data tag receiving cavity 34 is formed at the approximate centre of the tag holder 30 as a slot within the body 32 of the tag holder 30. The lower surface 36 includes three apertures: two boss-receiving apertures 38 and a drainage aperture 40.

The boss-receiving apertures 38 are dimensioned to receive the locating bosses 26, 28 when a data tag 10 is inserted. This mitigates unwanted movement of the tag 10 within the holder 30. The drainage aperture 40 mitigates rain or melt water collecting in the cavity 34. This may mitigate failure of the electronics on the data tag 10.

A lip 42 surrounds the upper portion of the cavity 34 and retains the tag 10 within the cavity 34. An entrance slot 44 is formed in one end of the tag holder 30 and allows a data tag 10 to be slid into the cavity 34. The entrance slot has internal corners 44a to facilitate tag entry and furthermore has chamfered/sloped surfaces 44b wider at the outside to facilitate tag entry. A thumb tab 46 is formed distally from the slot 44 and comprises a semi-circular recess formed in the otherwise rectangular cavity 34. The thumb tab 46 provides a useful way of removing the data tag 10 from the holder 30. The filleted edges 14 of the data tag 10 assist in placement within the entrance slot 44.

Four magnet cavities 48 each holding one magnet 50 (for a total of four magnets 50) are provided around the periphery of the tag cavity 34 within the body 32. Magnet retaining bungs 52 are used to seal the magnet cavities 48. The magnet retaining bungs 52 are rubber or plastic blocks with a slightly tapered or wedge-like shape to ensure an interference fit in the entrances to the magnet cavities 48. The magnets 50 enable the holder to be attached to rail track, other substantially metallic assets or metallic surfaces on otherwise non-metallic assets.

A central marker line 54 is provided on the tag holder 30 and is used for positioning and providing a measurement datum. The central marker line 54 is a recess which connects the two longer sides of the tag 30 at the mid-point; with the line intersecting with the tag cavity 34.

Four screw lugs 56 extend adjacent the entrances to the magnet cavities 48. Four screw apertures 58 are provided on the screw lugs 56. In the present embodiment, the screw apertures 58 are provided at the approximate centre points of the lugs 56. These enable optional attachment of the holder 30 to the assets using screws (not shown).

Two bracing spars 60 are effectively formed either side of the data tag receiving cavity 34 as can be seen in Figs 13 and 14 especially. The bracing spars 60 provide some structural rigidity to the holders 30. The bracing spars 60 house the magnet cavities 48 and magnets 50. The lower surface of the bracing spars (and therefore the lower surface of the holder) is provided with textured areas 60to increase friction against the asset to which the holder 30 attaches for improved grip/minimise movement under vibration. The bracing spars 60 are internally reinforced by bracing ribs 62.

As can be seen from Fig. 14, the bracing spars 60 provide that the data tag cavity is raised which increases the distance between rail/asset/mounting surface of metallic assets and internal tag electronics/antenna or RFID/ NFC tag allowing them to function effectively away from the metal. The tag cavity is spaced away from the metallic area.

A measurement block 64 is provided on the holder. The measurement block 64 comprises a body 66 having a V-shaped recess 68 formed in it. The V-shaped recess 68 is positioned perpendicularly to the central marker line 54. The measurement block 64 is provided adjacent the thumb tab 44.

A top surface 70 of the measurement block provides datum surface for measurement reference. This may, for example, replace the function of the Red Block on standard UK Rail Track Datum plates.

The triangular shape of the recess provides datum measurement point accommodating Offset measurement Gauge used on, for example, the London Underground.

Such gauges are used to take horizontal and vertical measurements to the running edge of the rail track.

An overview of the process of recordal according to the present invention is depicted as a flow chart in Fig. 2. This additionally involves a process of installation of railtrack structures and/or assets according to the present invention.

Step 300 is the project initialisation stage. In the present example, the stretch of track between J6 and J7 is surveyed and a drawing created showing the intended positions of the OLE support structures (X1, Y1; X2, Y2; X3, Y3; X4, Y4; X5, Y5; X6, Y6) and a further co-ordinate (X7, Y7) for placement of the feeder substation FS.

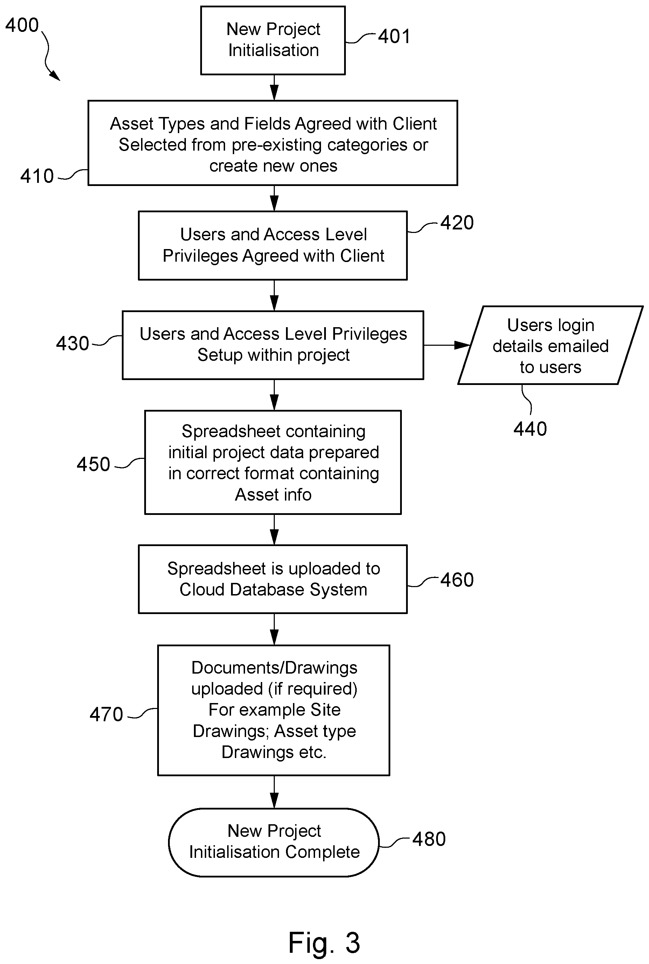

A project database is then created in step 400. Fig. 3 shows the process of the database creation. To aid understanding of the invention, a hypothetical scenario is depicted by way of example only, and specific integers, database constituents, actors and so forth may be modified or varied and remain within the scope of the present invention.

At step 410 the asset types and the fields required for this project are agreed and selected. These may be from pre-existing categories or may be created specifically for the project. A project database PDB is created for the storage and retrieval of information relating to the OLE electrification project of Line D.

Table 1 below shows the fields used for the present project:

**Table 1**

| Data Tag ID | Asset Category | Type | Foundation Type | Site Drawing | Line | Dist. East of DP | Dist. North of DP |
|---|---|---|---|---|---|---|---|
| | OLE | ST | Micropile | 1.PDF | D | X1 | Y1 |
| | OLE | ST | Micropile | 2.PDF | D | X2 | Y2 |
| | OLE | ST | Micropile | 3.PDF | D | X3 | Y3 |
| | OLE | ST | Micropile | 4.PDF | D | X4 | Y4 |
| | OLE | ST | Micropile | 5.PDF | D | X5 | Y5 |
| | OLE | ST | Micropile | 6.PDF | D | X6 | Y6 |
| | OLE | FS | Concrete | 7.PDF | D | X7 | Y7 |

The database contains eights field from the default listings available in the standard database creation tool.

Note that the distances are measured as being East and North, as this is a convention used by British Ordinance Survey and in use by Network Rail, amongst others. Alternative datum systems are possible.

The first field is the tag ID. Each separate data tag 10 used in the project will have a unique identifying number. In the present embodiment its simple integers from 1 to 7, but it will be appreciated to the skilled addressee that more complicated or different IDs may be used; all that is necessary is that each tag have a unique identification no to be recorded in this field. This field may remain blank at the start of the project prior to a particular data tag 10 being associated with a specific structure. This association of specific tag 10 with specific structure ST/FS may be made later as will subsequently be described.

The second field is the asset category. This is provided in a simple drop down list in which are grouped various different individual asset types into groups. In this project, the OLE asset type is selected for Overhead Line Electrification.

The Type field is for the specific type of asset, a more specific list of names or codes for the assets to be deployed in the project. In this particular example, the OLE asset type imports a drop down list of specific asset types associated with the task of overhead line electrification.

The code ST is used in the present embodiment to signify Structural Tower and FS to indicate Feeder Station.

Foundation Type field indicates what foundation type has been used to site the asset in the field. In the drop-down list of all possible Foundation Types, Micropile has been selected for the Support Towers and Concrete for the Feeder Station. The option may be provided for users to add custom field entries to cover possibilities not covered by groupings within drop down lists.

A Site Drawing field holds an electronic copy of a site drawing which may show an asset or group of assets either as it is planned to be in the field prior to deployment, or a post-deployment drawing showing the asset or group of assets has been deployed in the field. In the present embodiment, seven separate Portable Document Files have been created showing the intended deployment.

The next field is the Line field into which the particular line identifier is added. In the present example, these are all indicated as D for line D. Two location fields are provided: Dist. East of DP and Dist. North of DP. These are used to enter the distance in metres from the datum point PD in central station CS and the distance south of the datum point PD in the central station CS. The X and Y distances are entered per the planned deployment.

The database itself is provided with a project name identifier, and in this example may be saved as Line_D_OLE_J6_J7.dbs. A further database or field may be provided to link particular project names to overviews of the projects, or for budgetary reasons, etc. In this case it could indicate briefly that this particular project related to the OLE electrification of Line D between junctions J6 and J7.

A selection 420 of authorised users and access level privileges is made and individual usernames and password details are sent to each user to enable access to the database. The login details are emailed in step 440, but other delivery methods are possible.

Four users are selected in the present project: (1) Project Manager PM, who has ultimate responsibility for the project and has full read and write access to all field within the project data; (2) Construction Manager CM, who has been tasked with the deployment of the seven assets in their planned locations and likewise has full read and write access to the database; (3) Project Administrator PA, who assists Project Manager PM and has been granted read only rights to the database and (4) Construction Worker who carries out the work in assistance to Construction Manager CM who also has read and partial write access to the database.

Project Administrator PA prepares a spreadsheet of initial project data in a format which matches the project database (step 450) and sent to Project Manager PM. Project manager PM then uploads the spreadsheet into the Database, thereby populating the fields (Step 460).

Of course, the step of creating a spreadsheet of the asset information is entirely optional, and data may be added to the database manually through an appropriate Graphical Interface. Furthermore, the data may be tabulated into other file types prior to upload to the database system.

In the present embodiment, the database is stored remotely and may be accessed via the internet. The database is placed on a server within the Railway Network operator's premises, or within cloud computing storage, etc.

The individual PDF documents (or other relevant files) may then be uploaded in a similar fashion to the initial raw data in the spreadsheet. In the present embodiment, an internet browser user interface is provided at a specific URL for the project.

Step 480 marks the end of the new project being initialised.

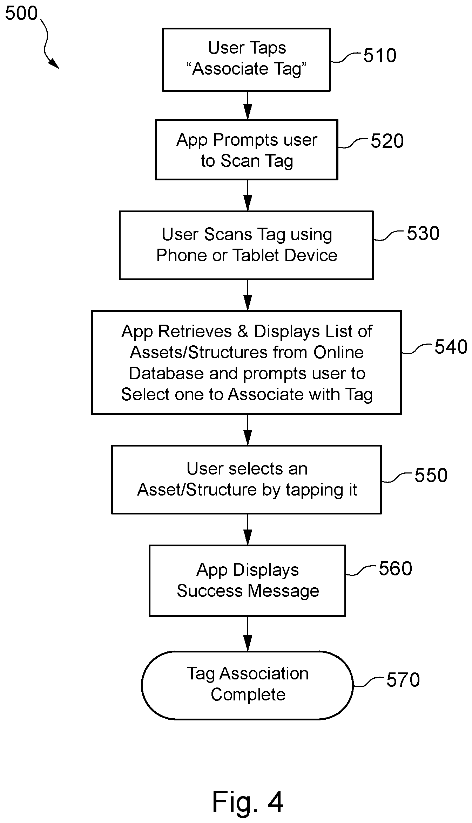

Fig. 4 shows the asset recordal in the field as the various assets are being deployed.

In the present example, Construction Manager CM instructs the Construction Worker CW to site the assets per the database. Construction Worker CW may access the database on an application or by a website URL login on a suitable electronic device such as a tablet, smartphone, laptop, etc. This provides CW with all the necessary information as to where each asset should be placed and upon which foundation type. CW successfully installs all six OLE support towers at the co-ordinates provided within the project database but discovers that it is impossible to site Feeder Station FS at desired co-ordinates

Six tags 10 are selected, loaded into six respective tag carriers 30 and are affixed to the six structural towers ST. CW may then use their device to access the project database to update the Tag ID field. A specific tag ID is now related to the entry of the asset in the project database.

In the application software on CW's device, CW selects an "Associate Tag" button at step 510, at which point the software prompts the user to "Scan Tag" at step 520.

CW presents the device having a Near Field Communication chip to which the application software may access to read the data tag 10. The application software reads the ID of the data tag 10 associated with the specific asset ST.

The application software then retrieves from the database and presents CW with various options (step 540).

CW may be prompted to indicate what asset type he is registering; at which point he may be asked to select the Asset Category and then the Asset type to narrow the range of database entries to associate the ID to.

In this example, CW may first select Asset Category as OLE which may then present CW with the options of either ST, FS (or further categories within the Asset type) or may also or in preference to that present CW with all seven database entries of Table 1. Should CW select ST as the specific type only the first six will be identified. Step 540.

Referring both to the coordinates and/or the site drawing fields CW can then select the particular ID to enter into the appropriate ID tag field. In this way, all six ST assets are associated to a specific tag 10 having a specific ID which may be readable by anyone with a suitable device and access privileges to the database. This may be by tapping the entry with their fingertip or some other known selection method (step 550).

An optional SUCCESS Message prompt may be given at Step 560 to confirm that the tag association is complete (570). Alternatively, the application or software may return to the Associate Tag step or provide some other form of feedback that the operation was a success. Other users such as CM, PM and/or PA or combinations thereof may be informed of same by some form of electronic prompt such as an email or a prompt within the application software notifying them of a change within the project database. In addition, one or more of the users may be prompted to confirm or validate the field data change.

CW discovers the co-ordinates X7, Y7 are unsuitable for the siting of the Feeder Station FS. CW informs CM who after further survey of the site determines that co-ordinates of X8, Y8 are suitable. CM may consult with PW or exercise their own initiative.

CW applies seventh tag 10 to the feeder station F7. CW in the present scenario has no access rights in order to modify the co-ordinate fields so CM must undertake the process separately.

A similar process may be followed. CM presents their device to the tag 10 in order that its unique ID be read by the device. CM may then select Asset Category as OLE which may then present CM with the options of either ST, FS (or further categories within the Asset type) or may also or in preference to that present CM with all seven database entries of Table 1. Should CM select FS as the specific type only the seventh entry will be identified. CM may associate that specific tag with that specific database entry or allow CW to carry out that task.

Furthermore, CM has full read/write privileges, so alters the database to reflect the new position of FS i.e. X8, Y8. Table 2 below shows the fields as they have been updated by CW and CM:

**Table 2**

| Data Tag ID | Asset Category | Type | Foundation Type | Site Drawing | Line | Dist. East of DP | Dist. North of DP |
|---|---|---|---|---|---|---|---|
| 1 | OLE | ST | Micropile | 1.PDF | D | X1 | Y1 |
| 2 | OLE | ST | Micropile | 2.PDF | D | X2 | Y2 |
| 3 | OLE | ST | Micropile | 3.PDF | D | X3 | Y3 |
| 4 | OLE | ST | Micropile | 4.PDF | D | X4 | Y4 |
| 5 | OLE | ST | Micropile | 5.PDF | D | X5 | Y5 |
| 6 | OLE | ST | Micropile | 6.PDF | D | X6 | Y6 |
| 7 | OLE | FS | Concrete | 7.PDF | D | X8 | Y8 |

Table 2 which represents the post-construction phase of the project now has each of the seven entries associated with a specific Data Tag ID from 1 to 7, and shows that the seventh asset of the project, the Feeder Station has been moved to co-ordinates X8, Y8. The revised co-ordinates are now visible to all users with read access privileges. In addition, notification of the alteration of the co-ordinate revision may be sent to PM and PA to inform them. PM may additionally have to sign off such an alteration, which may then be the subject of further notifications, for Health and Safety, planning purposes, etc.

For example, PM may decide or be obliged by rules or law to ensure that the Site Drawings are maintained up-to-date. In the above example, this may mean that PM must provide a new Site Drawing file 8.PDF showing the movement of FS to the new co-ordinates. Additionally, PM may have or wish to provide an explanation as to why, and further fields may be provided (or PM may include in the 8.PDF file) reasons as to the move to the new co-ordinates.

If one or more of the assets is provided with a Datum Plate DP providing a physical track side record of the placement of one or more of the assets, and these Datum Plates DP are provided with a known cavity size, the data tags 10 may be removed from their holders 30 and placed within a Datum Plate DP as a link from the data tags 10 to the project database. The holders 30 may be re-used.

This is an exemplary example only and simpler and more complex projects may apply the same basic method, but may modify the number of fields, number of database entries, and data types which may be stored within the database in known ways.

For example, the database may be created with fields to hold site photographs in JPEG form, spreadsheets containing further data, hyperlinks to specific URLs (for example, a specific asset linking to the manufacturer's manual or a health and safety alert on the specific asset type), etc.

For example, if one of the Support Towers in the above example proved to be unsuitable for use and required to be replaced with a different structure type, the process may be undertaken to record that asset change in the database. As a further example, the Foundation type may be deemed unsuitable and be changed in the field for on any of the seven structures being deployed. This change may then be recorded in the database.

There may be provided an offline mode and later syncing. For example, construction worker CW has to enter a tunnelwhere there is no mobile data signal.

CW can download the project database or a subject of it to their smart device before entering the no signal zone.

Scanning tags will then provide data from the smart device's downloaded copy.

Any photos or notes taken by the user via the App can be uploaded by tapping switching to online mode and tapping the SYNC button when back in an area with signal.

Photos, notes and drawings may be considered "visual representations" of the rail track assets.

The database sorts the notes into time stamped ordered where the timestamp has been applied by the app at time of creation.

As an alternative to a separate data tag and holder, a data tag having its own separate attachment method is envisaged, and moreover, the data tag may have magnets moulded within it or on a surface of it, to enable it to adhere to a metallic surface itself. The data tag may also be separately adhered to the asset by virtue of permanent or semi-permanent bonding, such as affixing by tape, or gluing in place. The gluing may of course be undone by the application of a suitable solvent or other deactivator in order for the data tag to be removable. Or it may be deemed preferable that there is permanent bonding of the data tag to the asset to enable the asset to be tracked within the database.

The data tag and data tag holder may be one continuous structure. The data tag may be provided simply with a body that contains or may be used with a suitable attachment means, method or apparatus.

The described process and apparatus may provide the tools and process to digitise the storage of railway construction data. The system makes the setting out and construction aspects of rail projects more efficient, cost effective and will yield improvements for the safety of railway construction workers.

The system stores data about rail track, line-side equipment and rail structures (collectively referred to as structures within this document) including those associated with rail and overhead electrification.

The system will also potentially replace all railway datum plates. This will be very beneficial from both a safety viewpoint in terms of reducing man hours on site and environmentally with the significant reduction of plastic usage.

### System Overview

The Rail Marking System comprises four elements:
- Radio tags each with Unique Identification Numbers (IDs)
- A Tag holder
- A Tag reader (which includes an App or software and mobile data communications)
- An On-line Remote or Cloud Database hosting the construction data

A Radio Tag with a unique ID number: There is one tag associated with each short length of track, piece of line side equipment or structure about which a unique set of construction data exists and corresponds.

A tag attaches to each piece of track, line side equipment or structure (optionally via the Tag Holder) and by virtue of each tag's unique ID number provides a unique ID that may be used to identify the piece of track, equipment or structure to which they are attached.

Optionally other related data may also be encoded/stored within the tag.

The tags may or may not have the unique ID printed on the front to make the ID human readable.
Other data may optionally be printed on the front such as Structure

Number etc.

The Tag's principle of operation may be based upon Near Field Communications (NFC,) RFID or other radio technology. The tag may be passive (no battery) or active (contains internal battery.)

The tags are readable via an electronic tag reader even on a metal or ferrous metal object.

The Tag is designed fit into an optional tag holder which adheres to the rail or line side equipment or structure. The tags are removable from the holder and may be re-inserted.

The tag may also be designed to mechanically fit the cavity on a standard rail Overhead Line Equipment (OLE) datum plate (see Figure 26 OLE Datum Plate) or any other rail network datum plate. The tag may also replace all railway datum plates.

Tags may also be designed to affix directly to the rail/line side equipment/structure without the use of the Tag Holder. In this case the tag may affix magnetically, via adhesive or self-adhesive backing tape or a combination of the above. In the case of magnetic fixing directly to equipment this is realised by over-moulding magnets into the tag.

Tag Construction: The tag comprises a electronic Radio module or radio microchip plus antenna encapsulated in a plastic housing. The module may be either fully encapsulated in the plastic (most likely solution) or adhered to a recess in the back of the plastic (less likely but method used in prototype.) The radio module/antenna combination may be an off-the-shelf or custom RFID or NFC tag. There may be an optional battery - e.g. a coin cell.

The plastic housing may be dimensioned to fit a standard OLE Datum Plate cavity - See Figure 26

There may be 2 (optional) holes in the tag designed to line up with the holes in an OLE Plate and facilitate mounting.

Two circular pip features may be fabricated on the rear of the tag on the version designed to fit the OLE datum plate used on electrified lines.

The front of the tag plastic may have a textured or pattern of locally raised or indented areas to increase a user's grip when sliding the tag in or out of the tag holder using fingers or thumb.

Tag Holder: the Tag Holder clamps or adheres to the rail/line side equipment/structure and holds the tag securely. The tag holder may secure to the rail magnetically, via adhesive or adhesive tape or a combination. In the magnetic case magnets are either over-moulded into the holder plastics or inserted via slots.

Design features facilitate retention of the tag under vibration and ease of insertion/removal by hand.

An optional roughened rear surface increases friction between the tag holder and the rail/equipment/structure and makes the tag holder more resilient to vibration-induced movement.

Tag Reader: The Tag Reader is a handheld device which is used to 'scan' or read the tags.

The likely realisation is a mobile phone with an App however a custom hardware device may also be used to perform the same functions.

It contains the electronic hardware and embedded software to:
- Scan/read the tag (likely an NFC or RFID reader)
- Communicate via mobile data communications with a remote database over the internet
- Display relevant data to the user
- Allow user input
- Re-write or update tags

Normally the reader will read the read the tag, retrieve relevant data relating to the structure from the remote database and display it to the user.

On-line Database: The database is remote or cloud database which contains construction data pertaining to the item/location identified by and related to each particular tag. The database is accessible over the internet by the tag reader. The database can be updated from usual sources such as PCs, tablets, laptops etc. including the tag reader by users with correct level of authorised log-in authorisations.

Generally the initial construction data held within the database is entered from the engineers pre-existing drawings/spreadsheets but may be updated as changes occur.

Typical Process: Engineers Drawing data is entered into the database setup for that particular construction project. Track and or Line side equipment is tagged by the surveyors.

## Claims

1. A method of recording data of rail-track structures comprising the steps of:
creating a database having one or more fields relating to the data of the rail track asset;
loading data onto the database;
attaching a data tag provided with a data tag identification value to a rail track asset;
associating the data tag identification value with a record of the rail track asset;
using said data to position the rail structural item.

2. The method of claim 1 wherein a data reader is used to collect and display the data identification value on the data tag.

3. The method of claims 1 or 2 wherein the data carrier is a radio tag.

4. The method of any preceding claim wherein there is provided a data carrier holder.

5. The method of any preceding claim wherein the plastic housing incorporates the data carrier.

6. The method of any preceding claim wherein the data carrier holder includes one or more magnets.

7. The method of any preceding claim wherein there is provided a database which stores the data against the unique identification number of the radio tag.

8. The method of claim 7 wherein the database stores placement data.

9. The method of any claims 7 or 8 wherein the database has additional fields to store further data about the rail track assets.

10. The method of any of claims 7 to 9 wherein the database contains visual representations of the rail track assets.

11. The method of any preceding claim wherein the data tags are stored after positioning proximal to the assets being placed.

12. The method of any preceding claim wherein the data tags are stored in a datum plate or plate(s).

13. A data tag for use in installing rail-track including the method of any of claims 1 to 12 to rail-track assets comprising a data carrier, a housing, and an attachment means.

14. A data tag according to claim 13 wherein the attachment means may be adhesive, mechanical or magnetic.

15. A data tag according to any preceding claim wherein the attachment means may comprise or include one or more magnets.
